# EUROPÄISCHE PATENTSCHRIFT

(11) **EP 1 805 447 B1**
(45) Veröffentlichungstag und Bekanntmachung des Hinweises auf die Patenterteilung: **16.09.2009**
(21) Anmeldenummer: 05810151.0
(22) Anmeldetag: 21.10.2005
(51) Int. Cl.: F16L 37/088, F16L 37/098

(54) **ZUGFESTE STECKKUPPLUNG**
HIGH-TENSILE PLUG-IN CONNECTOR
RACCORD ENFICHABLE RESISTANT A LA TRACTION

(30) Priorität: 28.10.2004 DE 102004052475
(43) Veröffentlichungstag der Anmeldung: 11.07.2007
(73) Patentinhaber: Eaton Fluid Power GmbH, 76532 Baden-Baden (DE)
(72) Erfinder: ULLRICH, Markus, 76534 Baden-Baden (DE); BUCHMÜLLER, Daniel, 76474 Au am Rhein (DE); WELLE, Stefan, 76549 Hügelsheim (DE); ULLRICH, Holger, 76477 Elchesheim-Klingen (DE)
(74) Vertreter: Leadbetter, Benedict
(86) Internationale Anmeldenummer: PCT/EP2005/011346
(87) Internationale Veröffentlichungsnummer: WO 2006/045553

(56) Entgegenhaltungen:
- WO-A-93/20379
- WO-A-20/05086823
- US-A- 5 570 910
- US-A- 5 829 792
- US-A- 6 155 612
- US-A1- 2003 178 844
- US-B1- 6 318 764

## Beschreibung

Die Erfindung betrifft eine Kupplungseinrichtung für Fluidleitungen.

Z.B. in der Automobiltechnik sind Anschluss- und Kupplungseinrichtungen für Fluidleitungen in Gebrauch, die sich einfach montieren lassen und in montiertem Zustand fest halten.

Aus der EP 0 845 093 B1 und der US 5 570 910 A ist eine Steckkupplung mit einem Kupplungskörper bekannt, der eine Einstecköffnung für einen Anschlussnippel aufweist. In der Einstecköffnung sind Sicherungsmittel und ein Dichtungsring gelagert. Der Einstecknippel weist eine zylindrische Mantelfläche auf, die mit dem Dichtungsmittel zusammenwirkt. Außerdem ist es mit einer ringförmigen Rippe versehen, die mit dem Sicherungsmittel zusammenwirkt. Eine Lösehülse ermöglicht das Spreizen des Sicherungsrings, um den Anschlussnippel bedarfsweise aus dem Kupplungskörper herausziehen zu können.

An seiner dem Anschlussnippel gegenüber liegenden Seite weist der Kupplungskörper ein Außengewinde auf, das die Verbindung mit einer weiter führenden Leitung oder einem anzuschließenden Gerät gestattet.

Aus der US 6,318,764 B1 ist eine Kupplungseinrichtung bekannt, bei der ein Kupplungsgehäuse mit einem entsprechenden Nippel zu verbinden ist. Dazu weist das Kupplungsgehäuse eine Anzahl von Rastfingern auf, die sich von dem Kupplungsgehäuse axial weg erstrecken und einen Kranz bilden. Die nach außen weisenden Rastnasen der Rastfinger fassen in eine Innennut des Nippels.

Ein in das Kupplungsgehäuse einzusteckender Anschlussstecker wird mittels eines radial einzuschiebenden Arretierungselements am Platz gesichert. Das Arretierungselement leitet von dem Stecker ausgehende Axialkräfte lokal in das Kupplungsgehäuse ein. Dadurch entstehen in dem Kupplungsgehäuse Scherkräfte.

Es ist Aufgabe der Erfindung, eine solche Kupplungseinrichtung zu verbessern.

Diese Aufgabe wird durch die Kupplungseinrichtung nach Anspruch 1 gelöst:

Die erfindungsgemäße Kupplungseinrichtung weist eine Kupplungsbuchse auf, die als gesondertes Teil, wie beispielsweise als Drehteil, Umformteil, Spritzgussteil oder dergleichen, hergestellt werden kann. Es kann dann auf geeignete Weise mit einer weiter führenden Leitung verbunden werden. Die Kupplungsbuchse kann jedoch auch an das Ende einer Leitung angeformt sein. Dazu kann es beispielsweise in einem Stauch- und/oder Rolliervorgang geweitet und mit einem nach innen weisenden Bund versehen sein. Unabhängig von der Herstellungsweise definiert dieser Bund eine Ringschulter mit einer von der Aufnahmeöffnung weg weisenden Anlagefläche. Der Kupplungsbuchse ist ein Kupplungsstecker zugeordnet, der als gesondertes Teil ausgebildet oder an ein Rohrende angeformt sein kann. Er wird im Wesentlichen durch einen zylindrischen Rohrabschnitt gebildet, der in einer gewissen Distanz von seinem freien Ende mit einem Radialvorsprung versehen ist. Dieser kann durch einen aufgelöteten Ring, durch einen gestauchten Bund oder eine sonstige an dem Rohrende ausgebildete Sicke gebildet sein.

In Folge der Einfachheit der Form sowohl der Kupplungsbuchse als des Kupplungssteckers können beide Teile auf einfachste Weise hergestellt werden. Bevorzugt wird die Herstellung durch Umformverfahren. Jedoch werden auch andere Verfahren zur Herstellung der gewünschten Außen- bzw. Innenform, wie das Auflösten, Anlöten oder Anschweißen von vorgeformten Elementen in Betracht gezogen.

Zur axialen Sicherung des Kupplungssteckers in der Kupplungsbuchse dient ein Kupplungsgehäuse mit einer Durchgangsöffnung, durch die der Kupplungsstecker hindurchsteckbar ist. Das Kupplungsgehäuse wird axial fest an der Kupplungsbuchse gesichert. Dazu dient ein Rastmittel, das das Kupplungsgehäuse bei zusammengefügter Kupplung vorzugsweise unlösbar mit der Kupplungsbuchse verbindet. Der Kupplungsstecker ist seinerseits durch ein Sicherungsmittel mit dem Kupplungsgehäuse verbunden, beispielsweise verrastet. Damit lässt sich die Kupplungseinrichtung besonders einfach montieren. Es ist lediglich zunächst das Kupplungsgehäuse mit der Kupplungsbuchse zu verrasten, wonach der Kupplungsstecker durch das Kupplungsgehäuse hindurch in die Aufnahmeöffnung der Kupplungsbuchse eingesteckt und in dem Kupplungsgehäuse gesichert wird. Die gewünschte dichte Fluidverbindung ist somit hergestellt.

Erfindungsgemäß wird das Rastmittel durch mehrere Rastfinger gebildet, die sich von einer Stirnseite des Kupplungsgehäuses weg erstrecken. Diese Rastfinger hintergreifen die an der Kupplungsbuchse ausgebildete Schulter und finden an deren Anlagefläche Halt. Zugleich liegen der zumindest eine Rastfinger in zusammengefügtem Zustand der Kupplungseinrichtung an der Außenumfangsfläche des Kupplungssteckers an, der mit der Schulter der Kupplungsbuchse einen Spalt definiert. Die Enden des wenigstens einen Rastfingers sind in Radialrichtung gemessen dicker als der ausgebildete Spalt. Solange der Kupplungsstecker in der Aufnahmeöffnung der Kupplungsbuchse sitzt ist das Kupplungsgehäuse somit unlösbar mit der Kupplungsbuchse verbunden. Der Kupplungsstecker bildet somit eine Sperrvorrichtung für das Rastmittel, das das Kupplungsgehäuse mit der Kupplungsbuchse verbindet.

Das Kupplungsgehäuse ist aus Kunststoff ausgebildet. Es ist vorzugsweise ein einstückiges Spritzgussteil, das sich einfach und kostengünstig herstellen lässt. Die Rastfinger sind mit dem Kupplungsgehäuse einstückig verbunden. Sie weisen eine den Materialeigenschaften des Kunststoffs entsprechende geringe federnde Nachgiebigkeit auf und können somit radial nach innen federn, um mit der Schulter der Kupplungsbuchse verrastet zu werden.

In entspanntem Zustand sind die Rastfinger vorzugsweise axial ausgerichtet. Das Kupplungsgehäuse kann somit mit der Kupplungsbuchse verrastet werden und sitzt danach schon vor dem Einstecken des Kupplungssteckers einigermaßen sicher an diesem. Es ist jedoch auch möglich, die Rastfinger so auszubilden, dass sie in ihrer Ruhestellung etwas zu der Mittelachse der Durchgangsöffnung des Kupplungsgehäuses geneigt sind. Sie werden dann erst durch das Einstecken des Kupplungssteckers aufgeweitet und an der Schulter der Kupplungsbuchse arretiert. Diese Ausführungsform kann bevorzugt sein, wenn eine einfache Demontierbarkeit der Kupplungseinrichtung gewünscht wird.

Des Weiteren ist es möglich, die Schulter, die vorzugsweise als Ringschulter ausgebildet ist, mit einer ebenen Anlagefläche zu versehen, die rechtwinklig zu der Mittelachse der Durchgangsöffnung des Kupplungsgehäuses orientiert ist. Die Rastfinger finden dann besonders sicheren Halt. Sie kann in diesem Sinne auch leicht konisch ausgebildet sein, wobei sich der Kegelwinkel dann nach außen öffnet. In diesem Fall ist der Halt der entsprechend geformten Rastfinger an der Anlagefläche besonders sicher.

Es wird auch in Betracht gezogen, die Anlagefläche der Schulter konisch auszubilden, wobei sich der Kegelwinkel dieses Konuses von der Mündung der Aufnahmeöffnung der Kupplungsbuchse weg öffnet. Eine derart schräg angelegte Schulter ermöglicht das Abziehen des Kupplungsgehäuses von der Kupplungsbuchse, wenn der Kupplungsstecker aus dem Kupplungsgehäuse entfernt ist, so dass die Rastfinger frei nach innen federn können. In montiertem Zustand blockiert der Kupplungsstecker die Rastfinger jedoch, so dass sie an der Schulter gehalten sind. Das Kupplungsgehäuse kann dann nicht mehr von der Kupplungsbuchse abgezogen werden.

Das Sicherungsmittel zur Befestigung des Kupplungssteckers in dem Kupplungsgehäuse ist ein Schnappring, der in einer in der Durchgangsöffnung ausgebildeten Ringnut angeordnet ist. Der Schnappring kann mit einem an dem Kupplungsstecker ausgebildeten Bund oder einer nach außen vorstehenden Rippe zusammenwirken, die an dem Schnappring eine axiale Anlage findet.

Der Schnappring weist dazu an seiner Außenseite eine Einführschräge auf, während er an seiner Innenseite eine gerade Anlageschulter aufweist. Dadurch wird das Ausziehen des Kupplungssteckers aus dem Kupplungsgehäuse durch äußere Kräfte unmöglich gemacht. Jedoch kann der Schnappring beispielsweise durch ein Lösewerkzeug geweitet werden, um den Kupplungsstecker aus dem Kupplungsgehäuse herausziehen und somit die Kupplungseinrichtung öffnen zu können.

Vorzugsweise ist das zwischen der Kupplungsbuchse und dem Kupplungsstecker wirkende Dichtungselement in der Kupplungsbuchse angeordnet. Das Kupplungsgehäuse weist somit lediglich Haltefunktion auf. Dies ermöglicht die Festlegung großzügiger Toleranzen bei der Herstellung des Kupplungsgehäuses. Die zur Erzielung der gewünschten Dichtheit erforderliche Präzision wird auf die Kupplungsbuchse und den Kupplungsstecker beschränkt.

Weitere Einzelheiten vorteilhafter Ausführungsformen der Erfindung sind Gegenstand der Beschreibung. In der Beschreibung sind Ausführungsformen der Erfindung veranschaulicht. Es zeigen:
- Figur 1: die erfindungsgemäße Kupplungseinrichtung in perspektivischer Darstellung in montiertem Zustand,
- Figur 2: die Kupplungseinrichtung nach Figur 1 in längs geschnittener Darstellung vor dem Einführen des Kupplungssteckers,
- Figur 3: die Kupplungseinrichtung nach Figur 1 während des Einführens des Kupplungssteckers in längs geschnittener Darstellung,
- Figur 4: die Kupplungseinrichtung nach Figur 1 in montiertem Zustand in längs geschnittener Darstellung,
- Figur 5: eine abgewandelte Ausführungsform der erfindungsgemäßen Kupplungseinrichtung vor der Einführung des Kupplungssteckers in die Kupplungsbuchse in längs geschnittener Darstellung,
- Figur 6: die Kupplungseinrichtung nach Figur 5 während des Einführens des Kupplungssteckers in die Kupplungsbuchse in längs geschnittener Darstellung,
- Figur 7: die Kupplungseinrichtung nach Figur 5 und 6 in montiertem Zustand in längs geschnittener Darstellung,
- Figur 8: eine weitere abgewandelte Ausführungsform der Kupplungseinrichtung nach Figur 1 vor dem Einführen des Kupplungssteckers in die Kupplungsbuchse in längs geschnittener Darstellung,
- Figur 9: die Kupplungseinrichtung nach Figur 8 während des Einführens des Kupplungssteckers in die Kupplungsbuchse in längs geschnittener Darstellung,
- Figur 10: die Kupplungseinrichtung nach Figur 8 in montiertem Zustand in längs geschnittener Darstellung,
- Figur 11: die Kupplungseinrichtung nach Figur 1 in einer weiteren abgewandelten Ausführungsform vor dem Einstecken des Kupplungssteckers in die Kupplungsbuchse in längs geschnittener Darstellung,
- Figur 12: die Kupplungseinrichtung nach Figur 1 während des Einführens des Kupplungssteckers in die Kupplungsbuchse in längs geschnittener Darstellung,
- Figur 13: die Kupplungseinrichtung nach Figur 1 in montiertem Zustand in längs geschnittener Darstellung,
- Figur 14: die Kupplungseinrichtung nach Figur 1 in einer weiteren abgewandelten Ausführungsform mit modifizierter Kupplungsbuchse vor dem Einstecken des Kupplungssteckers in die Kupplungsbuchse in längs geschnittener Darstellung,
- Figur 15: die Kupplungseinrichtung nach Figur 14 während des Einführens des Kupplungssteckers in die Kupplungsbuchse in längs geschnittener Darstellung und
- Figur 16: die Kupplungseinrichtung nach Figur 14 und 15 in montiertem Zustand in längs geschnittener Darstellung.

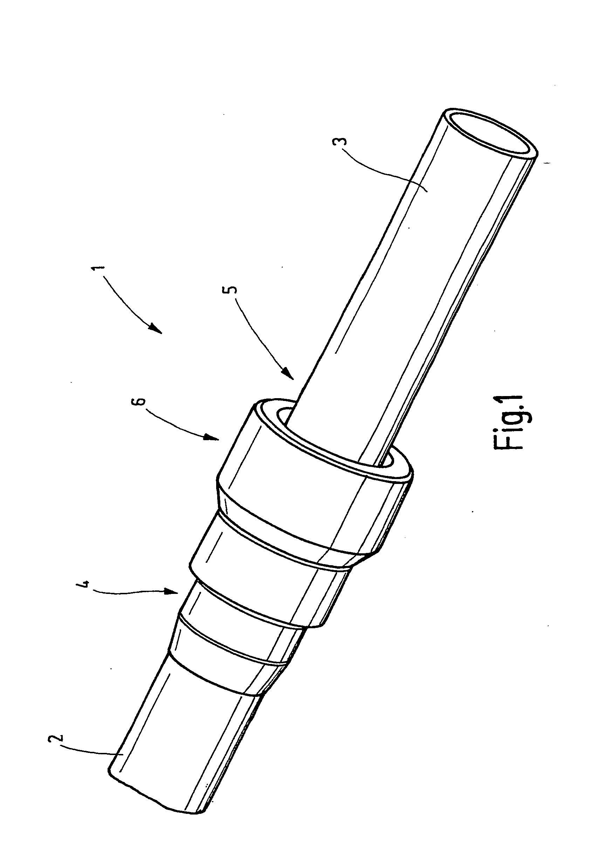

In Figur 1 ist eine Kupplungseinrichtung 1 im Ganzen veranschaulicht, die zur Verbindung zweier fluidführender Leitungen 2, 3 miteinander dient. Die Leitungen können beispielsweise Rohrleitungen aus einem geeigneten Metall, wie Aluminium, Stahl, Kupfer oder dergleichen oder auch Kunststoff sein. Die Fluidverbindung ist insbesondere für hohe Drücke geeignet. Es werden Leitungsdrücke von bis zu 130 bar und darüber ertragen. Die Kupplungseinrichtung 1 ist dazu geeignet, die dadurch entstehenden Axialkräfte aufzunehmen, ohne dass es zum unbeabsichtigten Lösen der Verbindung kommt. Das Ende der in Figur 1 veranschaulichten Leitung 2 bildet eine Kupplungsbuchse 4 während das Ende der Leitung 3 einen Kupplungsstecker 5 bildet. Um die Kupplungsbuchse 4 und den Kupplungsstecker 5 aneinander zu sichern, ist ein KUpplungsgehäuse 6 vorgesehen. Dieses ist beispiels- und vorzugsweise ein aus einem Kunststoff ausgebildetes Spritzgussteil.

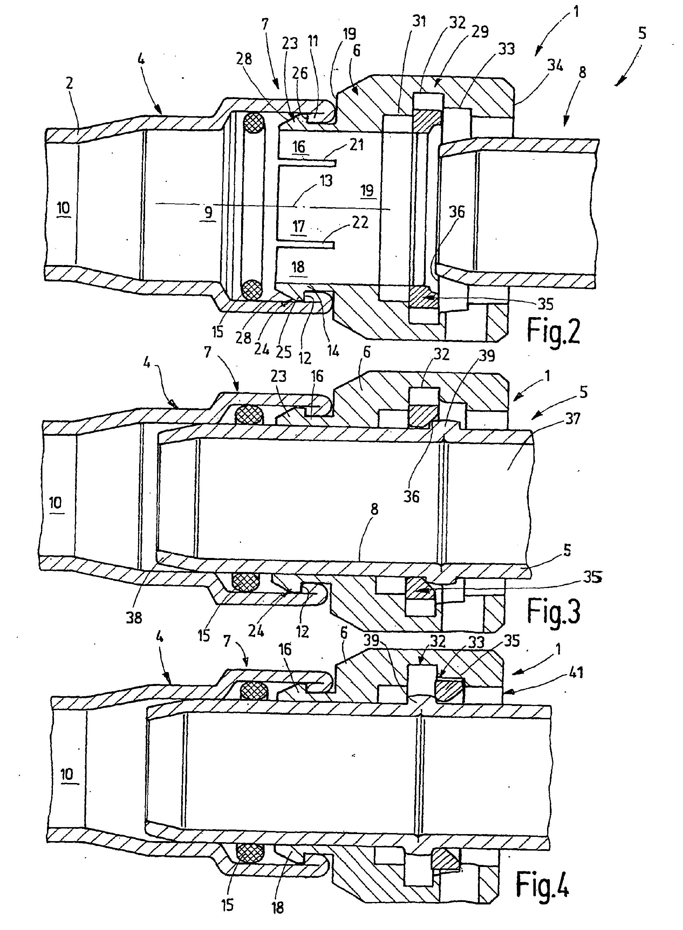

Der nähere Aufbau der Kupplungseinrichtung 1 geht aus Figur 2 bis 4 hervor. Die Kupplungsbuchse 4 ist beispielsweise an das Ende der Leitung 2 angeformt, indem dieses zunächst geeignet aufgeweitet wird, so dass ein zylindrischer Abschnitt 7 entsteht, dessen Innendurchmesser größer ist als der Außendurchmesser eines zylindrischen Abschnitts 8 des Kupplungssteckers 5.

Der aufgeweitete Abschnitt 7 der Kupplungsbuchse 4 und ein davor liegender, ebenfalls aufgeweiteter Abschnitt definieren eine Aufnahmeöffnung 9 für den Kupplungsstecker 5. Die Aufnahmeöffnung 9 schließt an einen von der Leitung 2 umschlossenen Fluidkanal 10 an.

Der aufgeweitete Abschnitt 7 weist des Weiteren einen nach innen umgebogenen Rand 11 auf. Seine Stirnseite weist zu dem Fluidkanal 10 und bildet eine Schulter 12. Die Schulter 12 weist eine ringförmige Anlagefläche auf, die im vorliegenden Ausführungsbeispiel eben ausgebildet ist. Sie ist dabei konzentrisch und rechtwinklig zu einer Mittelachse 13 der Aufnahmeöffnung 9 orientiert. An die Schulter 12 schließt sich eine ringförmige zylindrische Fläche 14 an, deren Durchmesser etwas größer ist als der Außendurchmesser des Abschnitts 8 des Kupplungssteckers 5, jedoch deutlich kleiner als der Innendurchmesser des sonstigen Abschnitts 7. Dieser nimmt ein Dichtungselement 15 beispielsweise in Form eines O-Rings oder in Form einer anderen geeigneten Dichtung auf.

Das Kupplungsgehäuse 6 ist mittels wenigstens eines, vorzugsweise mehrerer Rastfinger 16, 17, 18 an der Kupplungsbuchse 4 gehalten. Sie erstrecken sich dazu in Axialrichtung von einer ringförmigen Endfläche des Kupplungsgehäuse 6 weg und umschließen eine Durchgangsöffnung 19, deren Innendurchmesser zumindest im Bereich der Finger 16, 17, 18 nur ganz geringfügig größer ist als der Außendurchmesser des Abschnitts 8. Die Durchgangsöffnung 19 wird im Bereich der Finger 16, 17, 18 von einer zylindrischen Wandung umgrenzt.

Die Finger 16, 17, 18 sind untereinander gleich ausgebildet. Sie sind voneinander durch in Axialrichtung ausgebildete Schlitze 21, 22 getrennt. Die Finger 16, 17, 18 bestehen aus dem gleichen Kunststoff wie das Kupplungsgehäuse 6 und sind einstückiger Bestandteil desselben. Sie sind geringfügig flexibel und können somit radial nach innen federn. Jeder Finger 16, 17, 18 weist an seinem äußeren freien Ende einen Kopf 23, 24 auf, der an der der Schulter 12 zugewandten Seite mit einer Anlagefläche 25, 26 versehen ist. Diese ist übereinstimmend mit der entsprechenden Anlagefläche der Schulter 12 orientiert. An seiner gegenüber liegenden Seite ist der Kopf 23, 24 mit einer Schrägfläche 27, 28 versehen. Die radiale Dicke des Kopfs 23, 24 ist größer als die radiale Breite des zwischen der Fläche 14 und der Mantelfläche des Abschnitts 8 gebildete Spalt. Die Finger 16, 17, 18 bilden somit in Verbindung mit der Schulter 12 ein Rastmittel zur Sicherung des Kupplungsgehäuses 6 an der Kupplungsbuchse 4.

Im Weiteren weist die Kupplungsbuchse 6 außen eine im Wesentlichen zylindrische Form auf. Die Durchgangsöffnung 9 ist mit einer Ringnut 29 versehen, die einen abgestuften Durchmesser aufweist. Ein erster Nutabschnitt weist einen relativ geringen Durchmesser auf. Ein sich anschließender zweiter Nutabschnitt 32 weist einen großen Durchmesser auf während ein dritter Nutabschnitt 33 einen Durchmesser aufweist, der zwischen dem des ersten Nutabschnitts 31 und des zweiten Nutabschnitts 32 liegt. Des Weiteren setzt sich die Durchgangsöffnung dann bis zu der Stirnseite 34 des Kupplungsgehäuses 6 mit einem Durchmesser fort, der etwas größer als der des Abschnitts 8 ist.

Die Ringnut 29 nimmt einen Sicherungsring 35 auf, der als Schnappring ausgebildet ist. Er ist im Wesentlichen kreisförmig ausgebildet und geschlitzt. An seiner der Stirnseite 34 zugewandten Seite ist er mit einer Einführschräge 36 versehen. An seiner gegenüber liegenden Seite ist er hingegen im Wesentlichen plan. In entspanntem Zustand ist sein Innendurchmesser vorzugsweise ebenso groß oder geringfügig größer wie der Außendurchmesser des Abschnitts 8. In entspanntem Zustand nimmt der Sicherungsring 35 seinen kleinsten Durchmesser ein. Er liegt dabei an der zwischen den Nutabschnitten 31, 32 gebildeten Schulter an und kann nicht in den Nutabschnitt 31 gelangen. Hingegen kann er in den Nutabschnitt 33 überführt werden.

Der Kupplungsstecker 5 geht insbesondere aus Figur 3 hervor. Er umschließt einen Fluidkanal 37 und bildet beispielsweise das Ende einer Rohrleitung, die entsprechend umgeformt ist. Er kann jedoch auch als gesondertes Teil ausgebildet sein, das nachträglich mit einer Leitung, wie beispielsweise mit einer Metallrohrleitung oder einer Kunststoffleitung durch Löten, Kleben oder andere geeignete Verbindungstechniken verbunden ist. An seinem freien Ende ist der Kupplungsstecker 5 mit einem sich konisch verjüngenden Stirnabschnitt 38 versehen. Dieser erleichtert das Einstecken des Kupplungssteckers 5 in die Kupplungsbuchse 4. Zum Zusammenwirken mit dem Sicherungsring 35 ist der Kupplungsstecker 5 in einem gewissen Abstand zu dem außen konischen Stirnabschnitt 38 mit einer ringförmigen Rippe 39 versehen, die als Radialflansch ausgebildet ist. Die Rippe 39 ist vorzugsweise durch einen Umformvorgang (Kaltumformen) erzeugt, bei dem die Wandung des Abschnitts 8 des Kupplungssteckers 5 eine ringförmige, sich radial nach außen erstreckende Falte bildet. Diese ragt über den Außendurchmesser des Abschnitts 8 hinaus und ist deutlich größer als der Innendurchmesser des entspannten Sicherungsrings 35.

Die insoweit beschriebene Kupplungseinrichtung 1 funktioniert wie folgt:

Es wird davon ausgegangen, dass, wie in Figur 2 veranschaulicht, in die Kupplungsbuchse 4 ein Dichtungselement 5 eingelegt und das Kupplungsgehäuse 6 mit der Kupplungsbuchse 4 verrastet ist. Dazu sind die Rastfinger 16, 17, 18 in die Aufnahmeöffnung 9 der Kupplungsbuchse 4 eingeschoben worden bis die Köpfe 23, 24 der Rastfinger 16, 17, 18 hinter der Schulter 12 einschnappen. Es wird nun der Kupplungsstecker 5 mit seinem Abschnitt 8 (der auch als Fortsatz bezeichnet wird) in die Durchgangsöffnung 19 des Kupplungsgehäuses 9 eingeführt und durch die Durchgangsöffnung 19 hindurch in die Aufnahmeöffnung 9 der Kupplungsbuchse 4 geführt. Dieser Vorgang ist in Figur 3 veranschaulicht. Dabei sichert der Fortsatz oder Abschnitt 8 die Rastfinger 16 (17), 18 in dem zwischen der Außenumfangsfläche des Abschnitts 8 und der Innenumfangsfläche des Rands gebildeten Spalt. Die Köpfe 23, 24 sind hinter der Schulter 12 gefangen und verhindern somit ein Abziehen des Kupplungsgehäuses 6 von der Kupplungsbuchse 4.

Des Weiteren hat der Abschnitt 8 das Dichtungselement 15 in Radialrichtung komprimiert und somit eine Fluiddichtheit herbeigeführt.

Beim weiteren Einschieben des Kupplungssteckers 5 in das Kupplungsgehäuse 6 und die Kupplungsbuchse 4 findet, wie in Figur 3 dargestellt, die ringförmige Rippe 39 Anlage an der Einführschräge 36 des Sicherungsrings 35. Beim weiteren Einschieben des Kupplungssteckers 5 in das Kupplungsgehäuse 6 wird dadurch der Ring 35 aufgeweitet. Wenn die Rippe 39 den Sicherungsring 35 passiert hat springt dieser auf seinen ursprünglichen Durchmesser zurück. Die Rippe 39 befördert nun, wie aus Figur 4 ersichtlich, den Sicherungsring 35 in den Nutabschnitt 33. Dieser ist enger als der Nutabschnitt 32, in dem sich der Sicherungsring 35 zuvor aufweiten konnte. Der Durchmesser des Nutabschnitts 33 ist dabei so gering bemessen, dass der Sicherungsring 35 mit geringem Spiel gehalten, jedenfalls aber am Aufweiten gehindert wird, wie es erforderlich wäre, um die Rippe 39 nach außen passieren zu lassen. Der Sicherungsring 35 sichert somit den Kupplungsstecker 5 in dem Kupplungsgehäuse 6. Nachdem dieses mittels der Rastfinger 16, 17, 18 selbst an der Kupplungsbuchse 4 gesichert ist, kann der Kupplungsstecker 5 nicht mehr aus dem Kupplungsgehäuse 6 und der Kupplungsbuchse 4 herausgezogen werden. Außerdem zentriert der Sicherungsring 35 den Kupplungsstecker 5. Die fluiddichte Verbindung 2, 3 ist somit sicher und dauerhaft hergestellt.

Soll die Kupplungseinrichtung 1 gelöst werden, wird der Sicherungsring 35 mittels eines in den aus Figur 4 ersichtlichen Ringspalt 41 eingeführten Lösewerkzeuges beispielsweise in Form einer Lösehülse in den Nutabschnitt 32 zurück geschoben und dort gehalten. Kräftiger Zug an dem Kupplungsstecker 5 kann nun ein Aufweiten des Sicherungsrings 35 bewirken, wodurch der Kupplungsstecker 5 aus der Kupplungsbuchse 4 und dem Kupplungsgehäuse heraus gezogen werden kann. Dadurch werden auch die Rastfinger 16, 17, 18 frei gegeben, wodurch notfalls auch das Kupplungsgehäuse 6 von der Kupplungsbuchse 4 entfernt werden kann. Die Lösehülse kann auch so ausgebildet sein, dass sie ihrerseits den Sicherungsring 35 aufweitet, wenn sie in dem zwischen dem Kupplungsgehäuse 6 und dem Kupplungsstecker 5 verbleibenden Spalt eingeführt wird, wodurch sich der Kupplungsstecker 5 leichter aus der Kupplungsbuchse 4 herausziehen lässt.

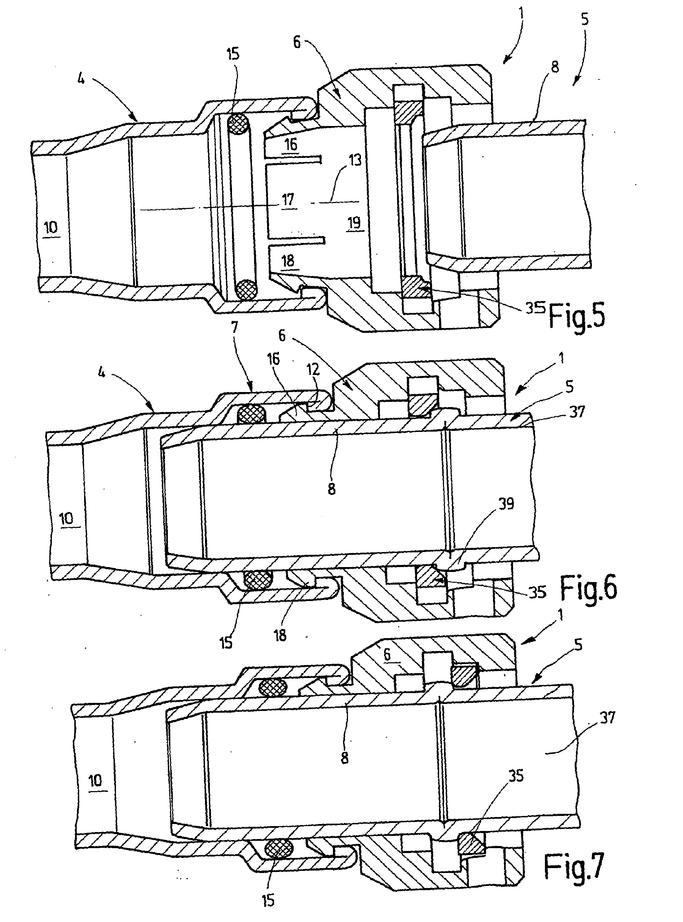

Figur 5 bis 7 veranschaulicht eine abgewandelte Ausführungsform der Kupplungseinrichtung 1, für die die vorstehende Beschreibung unter Zugrundelegung gleicher Bezugszeichen entsprechend gilt. Im Unterschied zu der vor stehenden Beschreibung erstrecken sich die Rastfinger 16, 17, 18 in entspanntem Zustand jedoch nicht in Axialrichtung sondern, wie Figur 5 zeigt, in einem spitzen Winkel zu der Mittelachse 13. Dies kann das Trennen des Kupplungsgehäuses 6 von der Kupplungsbuchse 4 erleichtern, so lange der Kupplungsstecker 5 nicht in die Kupplungsbuchse 4 eingeschoben ist. Ist dieser jedoch eingeschoben, wie Figur 6 zeigt, und sodann auch ordnungsgemäß in dem Kupplungsgehäuse 6 verrastet, wie Figur 7 zeigt, sind die Rastfinger 16, 17, 18 radial nach außen gedrängt und somit hinter der Schulter 12 gehalten. Ein Trennen der Kupplungsbuchse 4 und des Kupplungsgehäuses 6 voneinander ist in diesem Zustand nicht möglich.

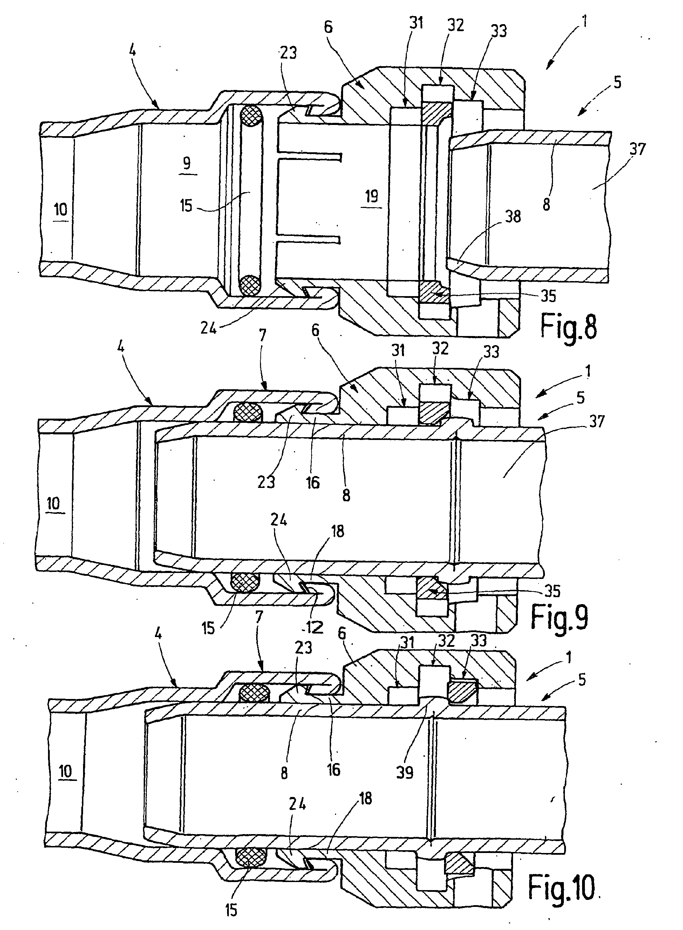

In den Figuren 8 bis 10 ist eine weitere Ausführungsform der Kupplungseinrichtung 1 veranschaulicht, für die die zu den Figuren 1 bis 4 gegebene Beschreibung unter Zugrundelegung gleicher Bezugszeichen entsprechend gilt. Abweichend von der vorstehenden Beschreibung gilt lediglich noch, dass die Schulter 12 eine konische Anlagefläche aufweist, deren Kegelwinkel sich von der Kupplungsbuchse 4 und dem Fluidkanal 10 weg öffnet. Die Köpfe 23, 24 der Rastfinger 16, 18 sowie der übrigen, nicht veranschaulichten Rastfinger, bilden Widerhaken, die das Kupplungsgehäuse 6 auch dann an der Kupplungsbuchse 4 unverlierbar halten, wenn der Kupplungsstecker 5 aus der Durchgangsöffnung 19 heraus gezogen ist. Zusätzlich sichert der Abschnitt 8, wie die Figuren 9 und 10 erkennen lassen, das Kupplungsgehäuse 6 an der Kupplungsbuchse 4, indem er sicherstellt, dass die Rastfinger 16, 17, 18 in ihrer radial äußeren Position gehalten werden.

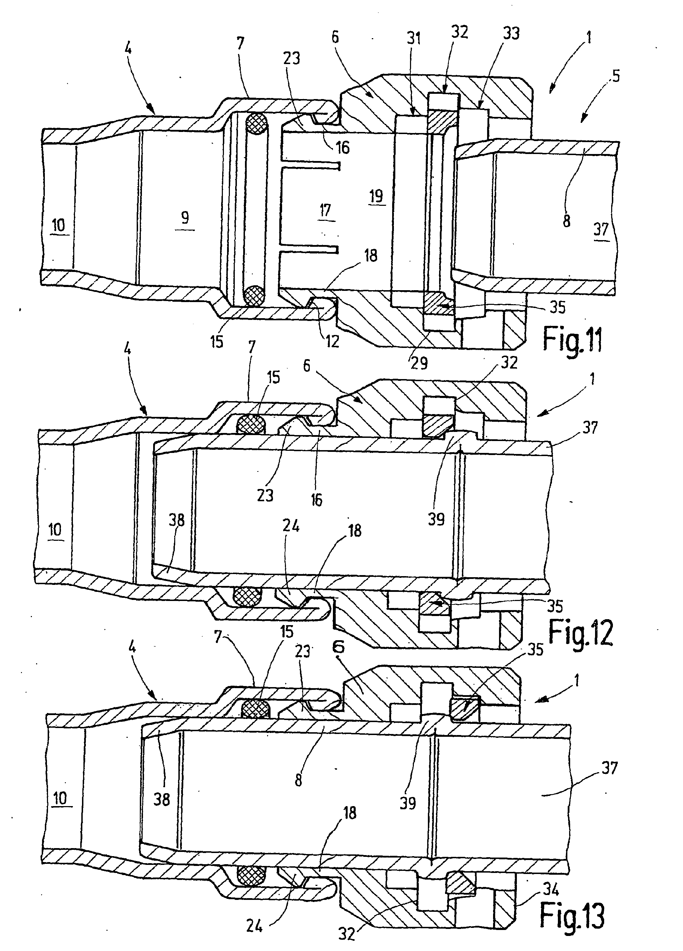

Die Figuren 11 bis 13 veranschaulichen eine weitere Ausführungsform, für die die zu den Figuren 1 bis 4 gegebene Beschreibung unter Zugrundelegung gleicher Bezugszeichen entsprechend gilt. Zusätzlich gilt, dass die Schulter 12 eine konische Anlagefläche aufweist. Der von dieser konischen Anlagefläche eingeschlossene Kegelwinkel öffnet sich nach innen zu dem Fluidkanal 10 hin. Die entsprechenden Anlageflächen der Rastfinger 16, 17, 18, die an der Schulter 12 anliegen, sind entsprechend geneigt. Damit lässt sich das Kupplungsgehäuse 6 von der Kupplungsbuchse 4 abziehen so lange der Kupplungsstecker 5 nicht durch die Durchgangsöffnung 19 hindurch in die Kupplungsbuchse 4 eingesteckt ist. Sobald jedoch der Abschnitt 8 den Bereich der Rastfinger 16, 17, 18 durchdrungen hat, werden diese, wie Figur 12 veranschaulicht, in ihrer radial äußeren Position fixiert. Wenn die Kupplungseinrichtung 1, wie in Figur 13 veranschaulicht, ordnungsgemäß zusammengefügt ist, lässt sie sich durch axial oder radial einwirkende Kräfte nicht lösen. Sie lässt sich nur lösen, indem der Sicherungsring 35, wie weiter oben beschrieben, in den Nutabschnitt 32 befördert und dort aufgespreizt wird und indem der Kupplungsstecker 5 dann aus dem Kupplungsgehäuse 6 heraus gezogen wird. Im Betrieb vorkommende axiale, zwischen der Kupplungsbuchse 4 und dem Kupplungsstecker 5 wirkende Zugkräfte oder Biegemomente oder vom Fluiddruck herrührende Kräfte können jedoch ein solches Lösen der Steckverbindung nicht bewirken.

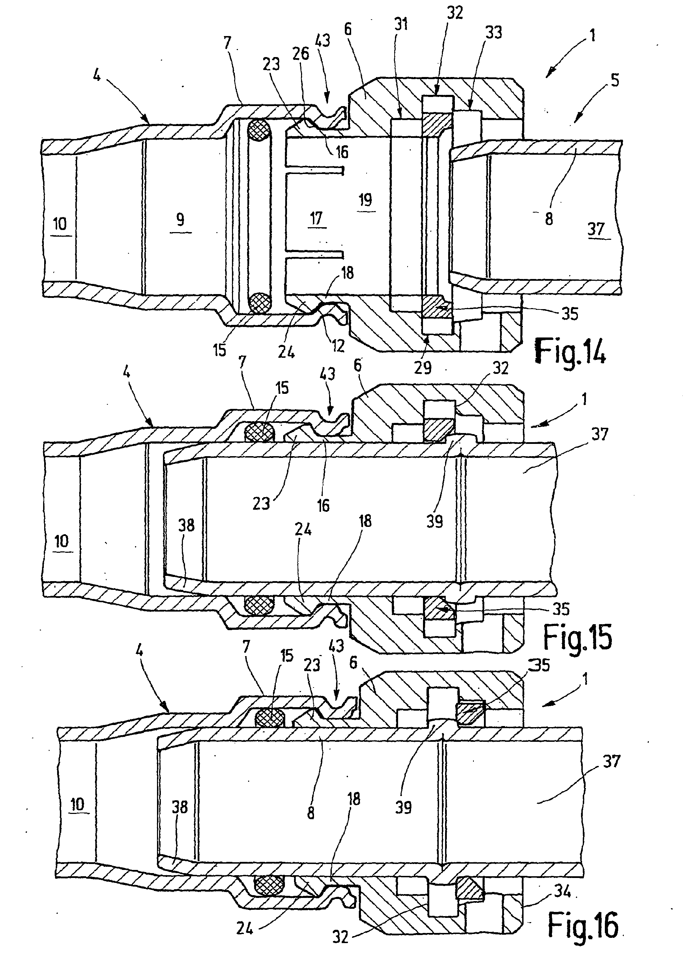

Die Figuren 14 bis 16 veranschaulichen eine weitere Ausführungsform der Kupplungseinrichtung 1, für die insbesondere die zu den Figuren 1 bis 4 sowie ergänzend den Figuren 11 bis 13 gegebene Beschreibung gilt. Die Besonderheit der Ausführungsform nach den Figuren 14 bis 16 liegt in der Ausbildung der Schulter 12. Diese wurde bei allen vorstehenden Ausführungsformen vorzugsweise durch Kaltumformung des äußeren, die Aufnahmeöffnung 9 umgebenden Randes der Kupplungsbuchse 4 erzielt. Mit dem nach innen umgebördelten Rand lässt sich eine wohl definierte Schulter erzeugen, wie es erforderlich ist. Dies stellt jedoch einige Anforderungen an die Fertigungstechnik und die Materialbeschaffenheit der Kupplungsbuchse 4. Die Ausführungsform der Figuren 14 bis 16 stellt hier geringere Anforderungen an die Verformbarkeit des Materials der Kupplungsbuchse 4 und die Prozessführung beim Umformen. Die Schulter 12 wird durch eine geeignete Ringsicke 43 gebildet, die einen runden oder, wie dargestellt, vorzugsweise angenähert trapezförmigen Querschnitt aufweisen kann. Vorzugsweise ist wiederum die Anlagefläche 26 der jeweiligen Rastfinger 16, 17, 18 in Form und Neigung an die Form und Neigung der entsprechenden, den Köpfen 23, 24 zugewandten Fläche der Schulter 12 angepasst. Die Ringsicke 43 kann, wie dargestellt, nach außen offen oder auch durch stärkere Stauchung geschlossen sein, so dass sie etwa wie die Rippe 39 dabei jedoch radial nach innen gerichtet ausgebildet ist. Die Kupplungsbuchse 4 kann mit der Sicke 43 enden oder sich noch über ein kurzes Stück als Rohrfortsatz fortsetzen, um die Sicke 43 zusätzlich zu stabilisieren.

Der Vorzug dieser Ausführungsform liegt in der leichten Herstellbarkeit der Form der Kupplungsbuchse 4 in einem Kaltumformverfahren, wie z.B. einem Stauchverfahren, einem Rollierverfahren oder einem kombinierten Stauch-/Rollierverfahren. Die Kupplungsbuchse 4 lässt sich an einem Rohrende eines Metallrohrs ausbilden, ohne dass zusätzliche Teile, wie Drehteile oder dergleichen mit dem Rohr verbunden werden müssten. Gleiches gilt für den Kupplungsstecker 5. Somit sind die Kupplungsbuchse 4 und der Kupplungsstecker 5 vorzugsweise einstückiger Bestandteil der jeweiligen Leitung 2, 3, indem sie einfach an die offenen Enden der Leitungen angeformt sind.

Die erfindungsgemäße Kupplungseinrichtung 1 weist eine Kupplungsbuchse 4, ein Kupplungsgehäuse 6 und einen Kupplungsstecker 5 auf. Die Kupplungsbuchse 4 und der Kupplungsstecker 5 sind derart einfach geformt, dass sie durch Kaltumformung an Rohrenden ausgebildet werden können. Das Kupplungsgehäuse 6 ist vorzugsweise ein einfaches Kunststoffteil, das im Spritzgussverfahren hergestellt werden kann. Rastmittel 12, 16, 17, 18 sichern das Kupplungsgehäuse 6 an der Kupplungsbuchse 4. Der Kupplungsstecker 5 sichert wiederum das Rastmittel 12, 16, 17, 18 in Rastposition, so dass sich das Kupplungsgehäuse 6 von der Kupplungsbuchse 4 nicht lösen kann, so lange der Kupplungsstecker 5 in der Kupplungsbuchse 4 steckt. Ein Sicherungsring 35 sichert wiederum den Kupplungsstecker 5 in dem Kupplungsgehäuse 6. Der Sicherungsring 35 kann bedarfsweise derart angeordnet und ausgebildet sein, dass er durch ein Lösewerkzeug in Freigabestellung überführt werden kann.

## Patentansprüche

1. Kupplungseinrichtung (1), insbesondere für unter Druck stehende Fluidleitungen (2, 3),
mit einer Kupplungsbuchse (4), die eine in einen Fluidkanal (10) übergehende Aufnahmeöffnung (9) aufweist, in der eine nach innen gerichtete Schulter (12) ausgebildet ist,
mit einem Kupplungsstecker (5), der einen rohrförmigen, einen Fluidkanal (37) enthaltenden Fortsatz (8) aufweist, der in die Aufnahmeöffnung (9) einführbar ist und dessen Außenumfangsfläche mit der Schulter (12) einen Spalt begrenzt,
mit einem Kupplungsgehäuse (6), das eine Durchgangsöffnung (19) zur Durchführung des Kupplungssteckers (5) aufweist und mit einem Sicherungsmittel (35) zur axialen Sicherung des Kupplungssteckers (5) in dem Kupplungsgehäuse (6) versehen ist und das an seiner der Kupplungsbuchse (4) zugewandten Stirnseite wenigstens ein Rastmittel (16, 17, 18) aufweist, das mit der Schulter (12) der Kupplungsbuchse (4) zusammenwirkt
wobei das Rastmittel (16, 17, 18) mehrere Rastfinger (16, 17, 18) umfasst, die mit dem Kupplungsgehäuse (6) einstückig verbunden sind und sich axial von dem Kupplungsgehäuse (6) weg erstrecken und die um die Durchgangsöffnung (19) herum verteilt angeordnet sind,
wobei jeder Rastfinger (16, 17, 18) an seinem freien Enden einen Rastvorsprung (23, 24) trägt, dessen radiale Dicke größer ist als die radiale Weite des Spalts,
wobei das Kupplungsgehäuse (6) aus Kunststoff ausgebildet ist,
**dadurch gekennzeichnet,**
**dass** das Sicherungsmittel (35) ein Schnappring ist, der mit einem an dem Kupplungsstecker (5) ausgebildeten Radialvorsprung (39) zusammenwirkt,
**dass** der Schnappring an seiner der Kupplungsbuchse (4) zugewandten Innenseite eine gerade Anlageschulter aufweist,
**dass** der Schnappring (35) an seiner der Kupplungsbusche (4) abgewandten Außenseite eine Einführschräge (36) aufweist,
**dass** dem Schnappring eine in der Durchgangsöffnung (19) ausgebildete Ringnut (29) zugeordnet ist, die einen abgestuften Durchmesser aufweist, wobei ein erster Nutabschnitt (31) einen relativ geringen Durchmesser, ein sich axial anschließender zweiter Nutabschnitt (32) einen großen Durchmesser aufweist, während ein sich dem zweiten Nutabschnitt (32) axial auschließender dritter Nutabschnitt (33) einen Durchmesser aufweist, der zwischen dem des ersten Nutabschnitts (31) und des zweiten Nutabschnitts (32) legt.

2. Kupplungseinrichtung nach Anspruch 1, **dadurch gekennzeichnet, dass** die Rastfinger (16, 17, 18) in entspanntem Zustand axial ausgerichtet sind.

3. Kupplungseinrichtung nach Anspruch 1, **dadurch gekennzeichnet, dass** die Rastfinger (16, 17, 18) in entspanntem Zustand zur Mittelachse (13) der Durchgangsöffnung (19) hin geneigt sind.

4. Kupplungseinrichtung nach Anspruch 1, **dadurch gekennzeichnet, dass** die Schulter (12) eine zu der Mittelachse (13) der Aufnahmeöffnung (19) rechtwinklig orientierte Anlagefläche (25, 26) aufweist.

5. Kupplungseinrichtung nach Anspruch 1, **dadurch gekennzeichnet, dass** die Schulter (12) eine zu der Mittelachse (13) der Aufnahmeöffnung (19) spitzwinklig orientierte Anlagefläche (25, 26) aufweist

6. Kupplungseinrichtung nach Anspruch 1, **dadurch gekennzeichnet, dass** die Schulter (12) eine Ringsschulter ist.

7. Kupplungseinrichtung nach Anspruch 1, **dadurch gekennzeichnet, dass** der Spalt ein Ringspalt ist.

8. Kupplungseinrichtung nach Anspruch 1, **dadurch gekennzeichnet, dass** das Kupplungsgehäuse (6) mit dem Kupplungsstecker (5) einen Spalt zur Einführung einer Lösehülse begrenzt.

9. Kupplungseinrichtung nach Anspruch 1, **dadurch gekennzeichnet, dass** die Kupplungsbuchse (4) einen Aufnahmeraum für ein Dichtungselement (15) aufweist.

## Claims

1. Connector device (1), in particular for pressurized fluid conduits (2, 3), comprising
a connector socket (4), which has a receiving opening (9) terminating in a fluid channel (10), said receiving opening being provided with an inward directed shoulder (12),
a connector plug (5), which has tubular extension (8) containing a fluid channel (37), whereby said extension can be inserted in the receiving opening (9) and has an outside circumferential surface defining a gap with the shoulder (12),
a connector housing (6), which has a passage opening (19) for the insertion of the connector plug (5), and which is provided with a locking means (35) for axially locking the connector plug (5) in the connector housing (6), and which has, on its front side facing the connector socket (4), at least one detent element (16, 17, 18) that cooperates with the shoulder (12) of the connector socket (4),
wherein the detent element (16, 17, 18) comprises several detent fingers (16, 17, 18) which are connected in one piece with the connector housing (6) and which extend axially from the connector housing (6) and are distributed around the passage opening (19),
wherein each detent finger (16, 17, 18) comprises, on its free end, a stop projection (23, 24) having a radial thickness that is greater than the radial width of the gap,
wherein the connector housing (6) is made of plastic material,
**characterized in that**
the locking means (35) is a snap ring, which cooperates with the radial projection (39) provided on the connector plug (5),
the snap ring comprises, at the inside facing to the connector socket (4), a straight abutment shoulder,
the snap ring (35) comprises, at the outside facing to the connector socket (4), an insertion bevel (36),
the snap ring is associated with an annular groove (29) in the passage opening (19) which comprises a graded diameter, wherein a first groove section (31) comprises a relatively small diameter and a second groove section (32) axially following the first groove section (31) comprises a large diameter, wherein a third groove section (33) axially following the second groove section (32) comprises a diameter which lies between the diameter of the first groove section (31) and the diameter of the second groove section (32).

2. Connector device in accordance with Claim 1, **characterized in that**, in relaxed state, the detent fingers (16, 17, 18) are oriented in axial direction.

3. Connector device in accordance with Claim 1, **characterized in that**, in relaxed state, the detent fingers (16, 17, 18) are inclined toward the central axis (13) of the passage opening (19).

4. Connector device in accordance with Claim 1, **characterized in that** the shoulder (12) has an abutment surface (25, 26), which is oriented at a right angle with respect to the central axis (13) of the receiving opening (19).

5. Connector device in accordance with Claim 1, **characterized in that** the shoulder (12) has an abutment surface (25, 26), which is oriented at an acute angle with respect to the central axis (13) of the receiving opening (19).

6. Connector device in accordance with Claim 1, **characterized in that** the shoulder (12) is an annular shoulder.

7. Connector device in accordance with Claim 1, **characterized in that** the gap is an annular gap.

8. Connector device in accordance with Claim 1, **characterized in that** the connector housing (6) and the connector plug (6) together define a gap for the insertion of a release sleeve.

9. Connector device in accordance with Claim 1, **characterized in that** the connector socket (4) has a receiving space for a sealing element (15).

## Revendications

1. Dispositif de raccord (1), notamment pour conduites de fluide sous pression (2, 3),
avec une douille de raccord (4) qui présente une ouverture de réception (9) se transformant en un canal de fluide (10) dans laquelle un épaulement (12) orienté vers l'intérieur est réalisé,
avec une fiche de raccord (5) qui présente un prolongement (8) contenant un canal de fluide tubulaire (37) qui peut être introduit dans l'ouverture de réception (9) et dont la face périphérique externe délimite avec l'épaulement (12) une fente,
avec un logement de raccord (6) qui présente une ouverture de passage (19) pour le passage de la fiche de raccord (5) et est pourvu d'un moyen d'arrêt (35) pour le blocage axial de la fiche de raccord (5) dans le logement de raccord (6) et qui présente au moins un moyen d'encliquetage (16, 17, 18) sur son côté frontal tourné vers la douille de raccord (4) qui coopère avec l'épaulement (12) de la douille de raccord (4),
le moyen d'encliquetage (16, 17, 18) comprenant plusieurs doigts à crans (16, 17, 18) qui sont reliés d'une pièce au logement de raccord (6) et s'étendent axialement depuis le logement de raccord (6) et qui sont disposés de manière répartie autour de l'ouverture de passage (19),
chaque doigt à crans (16, 17, 18) portant à son extrémité libre une saillie d'encliquetage (23, 24) dont l'épaisseur radiale est supérieure à la largeur radiale de la fente,
le logement de raccord (6) étant réalisé en plastique,
que le moyen d'arrêt (35) est un anneau d'encliquetage (Schnappring) qui coopère avec une saillie radiale (39) réalisée sur la fiche de raccord (5),
que l'anneau d'encliquetage (Schnappring) présente un épaulement d'appui droit sur son côté interne tourné vers la douille de raccord (4),
que l'anneau d'encliquetage (Schnappring) (35) présente un biseau d'insertion (36) sur son côté externe détourné de la douille de raccord (4),
qu'une rainure annulaire (29) réalisée dans l'ouverture de passage (19) est associée à l'anneau d'encliquetage, laquelle présente un diamètre étagé, une première portion de rainure (31) présentant un diamètre relativement faible, une deuxième portion de rainure (32) se rattachant de manière axiale présentant un grand diamètre tandis qu'une troisième portion de rainure (33) se rattachant de manière axiale à la deuxième portion de rainure (32) présente un diamètre qui se situe entre celui de la première portion de rainure (31) et de la deuxième portion de rainure (32).

2. Dispositif de raccord selon la revendication 1, **caractérisé en ce que** les doigts à crans (16, 17, 18) sont orientés de manière axiale à l'état détendu.

3. Dispositif de raccord selon la revendication 1, **caractérisé en ce que** les doigts à crans (16, 17, 18) sont inclinés vers l'axe médian (13) de l'ouverture de passage (19) à l'état détendu.

4. Dispositif de raccord selon la revendication 1, **caractérisé en ce que** l'épaulement (12) présente une surface d'appui (25, 26) orientée à angle droit par rapport à l'axe médian (13) de l'ouverture de réception (9).

5. Dispositif de raccord selon la revendication 1, **caractérisé en ce que** l'épaulement (12) présente une surface d'appui (25, 26) orientée à angle aigu par rapport à l'axe médian (13) de l'ouverture de réception (9).

6. Dispositif de raccord selon la revendication 1, **caractérisé en ce que** l'épaulement (12) est un épaulement annulaire.

7. Dispositif de raccord selon la revendication 1, **caractérisé en ce que** la fente est une fente annulaire.

8. Dispositif de raccord selon la revendication 1, **caractérisé en ce que** le logement de raccord (6) délimite avec la fiche de raccord (5) une fente pour l'introduction d'un manchon de desserrage.

9. Dispositif de raccord selon la revendication 1, **caractérisé en ce que** la douille de raccord (4) présente un espace de réception pour un élément d'étanchéité (15).
